# EUROPEAN PATENT APPLICATION

(11) **EP 4 365 735 A1**
(43) Date of publication of application: **08.05.2024**
(21) Application number: 23204805.8
(22) Date of filing: 20.10.2023
(51) Int. Cl.: G06F 9/46, A63F 13/35, G06F 9/54

(54) **SYSTEM**

(30) Priority: 07.11.2022 GB 202216515
(71) Applicant: Krause Limited, London EN4 9EB (GB)
(72) Inventor: Krause, Alan Wayne, Cambridge, CB4 3QR (GB)
(74) Representative: Mewburn Ellis LLP

(57) **Abstract**

A system. The system comprising: a plurality of application servers, each configured to simulate one or more objects in a shared virtual environment, and to communicate with one or more client devices so as to exchange data related to the one or more objects and the shared virtual environment. Each object generates and/or has associated with it, object state data indicative of one or more states of each object. The system further comprises an object state management server, configured to store and distribute object state data of the one or more objects simulated in the shared virtual environment. The object state management server is connected via a network to the plurality of application servers, and is configured to: receive further object state data related to a given object from a respective application server of the plurality of application servers, and to distribute said further object state data to at least one other application server of the plurality of application servers.

## Description

### Field of the Invention

The present invention relates to a system, a computer-implemented method, a non-transitory computer-readable storage medium, an object state management server, and an application server.

### Background

When real-time, or near real-time computer simulations, such as those in large scale online video games, scale beyond the capabilities of a single physical server, these simulations need to be distributed across multiple servers. As the number of distributed simulations scale, the bandwidth and computational power needed to keep the state of objects within the simulations up to date grows.

US 10,506,031 B1 proposes a dynamically scalable computing framework for use in support of online services. The network is formed from computing nodes which are communicatively coupled to one another, via communication hubs, in a mesh configuration. Here, the use of load balancing modules is proposed for executing on each computing node which monitors the processing relating to the plurality of data objects within a simulation. When a processing threshold is reached, the computing node is proposed to reallocate processing of a subset of the data objects it is responsible for to a second computing node of the same type.

There exists a problem in that as the number of computing nodes scales to meet demand, the amount of bandwidth and computational power required in such a framework increases.

### Summary

Accordingly, in a first aspect, embodiments of the invention provide a system comprising:
a plurality of application servers, each configured to simulate one or more objects in a shared virtual environment, and to communicate with one or more client devices so as to exchange data related to the one or more objects and the shared virtual environment;
wherein each object generates and/or has associated with it, object state data indicative of one or more states of each object;
the system further comprising an object state management server, configured to store and distribute object state data of the one or more objects simulated in the shared virtual environment;
wherein the object state management server is connected via a network to the plurality of application servers, and is configured to:
   receive further object state data related to a given object from a respective application server of the plurality of application servers, and
   to distribute said further object state data to at least one other application server of the plurality of application servers.

Advantageously, such a system reduces the bandwidth required as the number of application servers grows. By having a model where the application servers communicate object state data to an object state management server, which communicates this data on to the application servers, the need for each application server to communicate with all others is reduced. Further, by only sending data as it changes (e.g. in response to receiving the further state data) the amount of data sent between application servers is significantly reduced.

Optional features of the invention will now be set out. These are applicable singly or in any combination with any aspect of the invention.

The network may be a TCP/IP network. The object state management server may be connected to the application servers over a local area network, or a wide area network.

The shared virtual environment may be a shared video game environment, for example a massively multiplayer online video game environment (MMO) in which a plurality of players interact. The shared virtual environment may be referred to a shared simulated environment. By environment, it may be meant a space (e.g. in two or more dimensions) which the players can traverse. The objects may be player-interactable objects. For example, the objects may be items within the shared virtual environment. The object state data could therefore refer to a condition, quantity, value, or another property of the object.

The object state management server may be configured to ascertain an owner of the one or more objects simulated by a given application server, and to update object state data associated with the object only if the updated state data or request for update is received from the owner of the object. The owner may be an application server of the plurality of application servers.

The system may comprise a plurality of object state management servers.

A given object state management server of the plurality may be configured to migrate all object state data stored on that object state management server to another object state management during a hand-over process.

One of the plurality of object state management servers may be a nexus object state management server, and the plurality of application servers may be configured to transmit all object state data requests to the nexus object state management server, and the nexus object state management server may be configured to forward on object state data requests to a respective object state management server.

The object state management server may be configured to distribute changes in object state data to one or more application servers. By only sending changes in data, the amount of communication required is further reduced.

Distribution of the further object state data may be performed in batches, for example in response to a last acknowledged update. For example, distribution may be performed using the user datagram protocol.

The object state management server may be configured to receive a request from an application server of the plurality of application servers and/or another object state management server for all state data generated by or associated with one or more objects, and to transmit to the requesting application server and/or requesting object state management server said data.

The object state management server may be configured to receive a subscription request for an object from an application of the plurality of application servers, and to transmit any changes to the state data for said object to the subscribing application server.

The application servers may be client devices, configured to communicate with one or more other client devices, each client device providing a user with access to the shared virtual environment.

The object state management server may be configured, when it receives a request to update state data associated with an object from an application server of the plurality of application servers which is not the owner of the object, to forward the request to update the object state data to another application server of the plurality of application servers which is the owner of the object. By providing such forwarding, prediction can be used to mitigate latency. A client device or application server can predict the state change of the object it is not owner of (and so is not authoritative over). It can associate a state change with a message sent to the object state management server. By acknowledging the processing of that message by the authoritative client / application server with the object's state update, the client / application server can then remove the local adjustment and directly use the current accurate state. This provides a mechanism to predict the state locally without latency, and correction if the state was miss-predicted.

The simulation may be a real-time or near real-time simulation.

In a second aspect, embodiments of the invention provide a computer-implemented method of managing object state data, the method being performed on a system comprising:
a plurality of application servers; and
an object state management server;
the method comprising:
   simulating, by each of the application servers, one or more objects in a shared virtual environment, and communicating to one or more client devices data relating to the one or more objects and the shared virtual environment;
   storing and distributing, by the object state management server, object state data generated by and/or associated with the or each object, which is indicative of one or more states of each object;
   transmitting, by a respective application server of the plurality of application servers to the object state management server over a network, further object state data related to a given object; and
   distributing, by the object state management server, the further object state data to at least one other application server of the plurality of application servers over the network.

The network may be a TCP/IP network. The object state management server may be connected to the application servers over a local area network, or a wide area network.

The shared virtual environment may be a shared video game environment, for example a massively multiplayer online video game environment (MMO) in which a plurality of players interact. The shared virtual environment may be referred to a shared simulated environment. By environment, it may be meant a space (e.g. in two or more dimensions) which the players can traverse. The objects may be player-interactable objects. For example, the objects may be items within the shared virtual environment. The object state data could therefore refer to a condition, quantity, value, or another property of the object.

On receipt of the further object state data, the object state management server may ascertain an owner of the one or more objects simulated by a given application server, and to update object state data associated with the object only if the updated state data or request for update is received from the owner of the object. The owner may be an application server of the plurality of application servers.

The system may comprise a plurality of object state management servers. A given object state management server of the plurality may migrate all object state data stored on that object state management server to another object state management during a hand-over process. One of the plurality of object state management servers may be a nexus object state management server, and the plurality of application servers may transmit all object state data requests or further object state data to the nexus object state management server, and the nexus object state management server may be configured to forward on object state data requests or further object state data to a respective object state management server.

The object state management server may distribute changes in object state data to one or more application servers. By only sending changes in data, the amount of communication required is further reduced.

Distribution of the further object state data may be performed in batches, for example in response to a last acknowledged update. For example, distribution may be performed using the user datagram protocol.

The object state management server may receive a request from an application server of the plurality of application servers and/or another object state management server for all state data generated by or associated with one or more objects, and transmit to the requesting application server and/or requesting object state management server said data.

The object state management server may receive a subscription request for an object from an application of the plurality of application servers, and transmit any changes to the state data for said object to the subscribing application server.

The application servers may be client devices, which communicate with one or more other client devices, each client device providing a user with access to the shared virtual environment.

The object state management server may, when it receives a request to update state data associated with an object from an application server of the plurality of application servers which is not the owner of the object, forward the request to update the object state data to another application server of the plurality of application servers which is the owner of the object. By providing such forwarding, prediction can be used to mitigate latency. A client device or application server can predict the state change of the object it is not owner of (and so is not authoritative over). It can associate a state change with a message sent to the object state management server. By acknowledging the processing of that message by the authoritative client / application server with the object's state update, the client / application server can then remove the local adjustment and directly use the current accurate state. This provides a mechanism to predict the state locally without latency, and correction if the state was miss-predicted.

The simulation may be a real-time or near real-time simulation.

In a third aspect, embodiments of the invention provide a non-transitory computer-readable storage medium, containing machine executable instructions which, when executed on a processor, cause the processor to perform the method of the second aspect including any one or any combination of the optional features set out with reference thereto.

In a fourth aspect, embodiments of the invention provide an object state management server, comprising:
a communications module, configured to connect to a plurality of application servers over a network, each application server being configured to simulate one or more objects in a shared virtual environment, and to receive therefrom object state data indicative of one or more states of each object;
an object state data store, configured to store the received object state data; and
an object state data distributor;
wherein the communications module is further configured to receive further object state data related to a given object from a respective application server of the plurality of application servers; and
the object state data distributor is configured to distribute, via the communications module, said further object state data to at least one other application server of the plurality of application servers.

The network may be a TCP/IP network. The object state management server may be connected to the application servers over a local area network, or a wide area network.

The object state management server may be configured to ascertain an owner of the one or more objects simulated by a given application server, and to update object state data associated with the object only if the updated state data or request for update is received from the owner of the object. The owner may be an application server of the plurality of application servers.

The object state management server may be configured to distribute changes in object state data to one or more application servers. By only sending changes in data, the amount of communication required is further reduced.

Distribution of the further object state data may be performed in batches, for example in response to a last acknowledged update. For example, distribution may be performed using the user datagram protocol.

The object state management server may be configured to receive a request from an application server of the plurality of application servers and/or another object state management server for all state data generated by or associated with one or more objects, and to transmit to the requesting application server and/or requesting object state management server said data.

The object state management server may be configured to receive a subscription request for an object from an application of the plurality of application servers, and to transmit any changes to the state data for said object to the subscribing application server.

The object state management server may be configured, when it receives a request to update state data associated with an object from an application server of the plurality of application servers which is not the owner of the object, to forward the request to update the object state data to another application server of the plurality of application servers which is the owner of the object. By providing such forwarding, prediction can be used to mitigate latency. A client device or application server can predict the state change of the object it is not owner of (and so is not authoritative over). It can associate a state change with a message sent to the object state management server. By acknowledging the processing of that message by the authoritative client / application server with the object's state update, the client / application server can then remove the local adjustment and directly use the current accurate state. This provides a mechanism to predict the state locally without latency, and correction if the state was miss-predicted.

In a fifth aspect, embodiments of the invention provide an application server comprising:
a processor, configured to simulate one or more objects in a shared virtual environment, and to communicate with one or more client devices so as to exchange data related to the one or more objects and the shared virtual environment; and
a communications module, configured to:
   communicate with one or more other applications servers over a network, each simulating respective objects in the same shared virtual environment;
   transmit over the network, to an object state management server, object state data related to a given object in the shared virtual environment; and
   receive over the network, from the object state management server, object state data related to another object in the shared virtual environment.

The network may be a TCP/IP network. The object state management server may be connected to the application servers over a local area network, or a wide area network.

The shared virtual environment may be a shared video game environment, for example a massively multiplayer online video game environment (MMO) in which a plurality of players interact. The shared virtual environment may be referred to a shared simulated environment. By environment, it may be meant a space (e.g. in two or more dimensions) which the players can traverse. The objects may be player-interactable objects. For example, the objects may be items within the shared virtual environment. The object state data could therefore refer to a condition, quantity, value, or another property of the object.

The application servers may be client devices, configured to communicate with one or more other client devices, each client device providing a user with access to the shared virtual environment.

The simulation may be a real-time or near real-time simulation.

Further aspects of the present invention provide: a computer program comprising code which, when run on a computer, causes the computer to perform the method of the second aspect; a computer readable medium storing a computer program comprising code which, when run on a computer, causes the computer to perform the method of the second aspect; and a computer system programmed to perform the method of the second aspect.

The invention includes the combination of the aspects and preferred features described except where such a combination is clearly impermissible or expressly avoided.

### Brief Description of the Drawings

Embodiments of the invention will now be described by way of example with reference to the accompanying drawings in which:
Figure 1 shows a system;
Figure 2 shows an example of an object state management server;
Figure 3 shows an example of an application server;
Figure 4 shows an alternative system;
Figure 5 shows a flow chart; and
Figure 6 shows a swim lane diagram.

### Detailed Description and Further Optional Features

Aspects and embodiments of the present invention will now be discussed with reference to the accompanying figures. Further aspects and embodiments will be apparent to those skilled in the art. All documents mentioned in this text are incorporated herein by reference

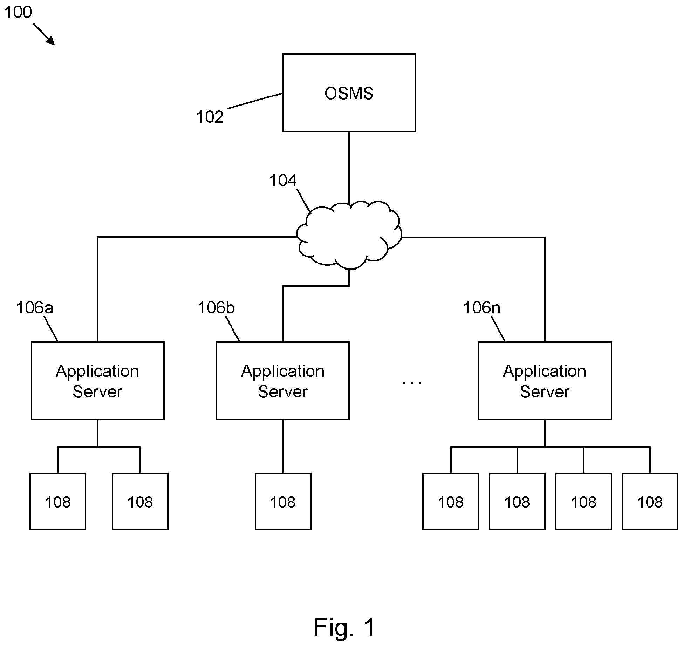

Figure 1 shows a system 100. The system includes an object state management server 102 (OSMS) connected via a network 104 to a plurality of application servers 106a - 106n. Each application server is connected to and communicates with client devices 108. The application servers simulate a shared virtual environment, for example a video game environment, within which are a plurality of objects.

Each application server is responsible for, and has authority over, a given set of objects which are within the shared virtual environment. For example, an application server may be responsible for and have authority over a character avatar controlled by the user of a client device 108. The character avatar may be an example of an object; and may have a plurality of states, for example health, experience, etc. The value of these states, so the avatar's health, experience, etc., are examples of object state data. As the character avatar interacts with other objects in the shared virtual environment, other application servers (responsible for other objects) will need to know the values of these states in order to continue the simulation.

Therefore, as the simulation continues, the application server on which the avatar character object is managed will transmit further object state data to those application servers which have subscribed to the object. This object state data is transmitted to the OSMS via network 104, which maintains a list of all application servers which have subscribed. It then distributes this object state data to these application servers. In a different example, the OSMS may send the object state data to all application servers (and leave it to the application servers to determine whether they need to cache the object state data).

In a further example, the application servers 106a-106n may themselves be client devices. In that sense, the system may be implemented as a peer-to-peer (or P2P) system. In such an example, the client devices would still connect to the OSMS 102 via network 104.

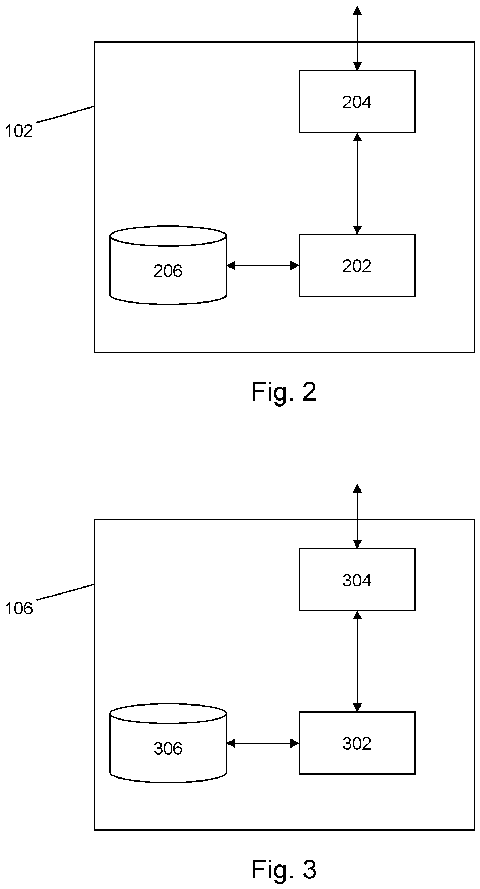

Figure 2 shows an example of an object state management server 102. The OSMS 102 includes a processing unit 202, which is connected to a network adaptor 204 and storage 206. The network adaptor 204 is an example of a communications module, and can be for example a TCP/IP network adaptor to allow communication over a local or wide area network. The processing unit 202 is an example of the object state data distributor, and can be for example one or more central processing units (CPUs) within one or more physical servers. The storage 206 is an example of the object state data store, and can for example be one or more volatile or permanent data storage devices (such as RAM, HDD, SSD etc.). The network adaptor 204 is configured to connect to a plurality of application servers 106a-106n, and to exchange with them object state data. This object state data, when received by the network adaptor 204 is provided to the processing unit 202. The processing unit 202 is then configured to determine which, if any, application servers are to be sent the received object state data. The processing unit 202 will also store the object state data in the storage 206, or update the current value of a particular object state if the object state itself is already stored in the storage 206 with a now out of date value.

Figure 3 shows an example of an application server 106. The application server 106 includes a processing unit 302, which is connected to a network adaptor 304 and storage 306. The network adaptor 304 is an example of a communications module, and can be for example a TCP/IP network adaptor to allow communication over a local or wide area network. The processing unit 302 can be, for example, one or more central processing units (CPUs) within one or more physical servers. The processing unit is configured to simulate one or more objects in a shared virtual environment, and to communicate (via the network adaptor) with one or more client devices so as to exchange data related to the one or more objects and the shared virtual environment. As the objects are interacted with, their states will change. Where the application server has authority over a given object, these changes in state, or the updated values themselves, are communicated via the network adaptor 304 with an OSMS 102 as discussed previously for distribution to other application servers. The application server 106 will also receive, from the OSMS 102, changes in or updated values of object states for objects which the application server does not have authority over. Where it receives these changes or updated values, the application server will use them to update the locally storage values for the object state.

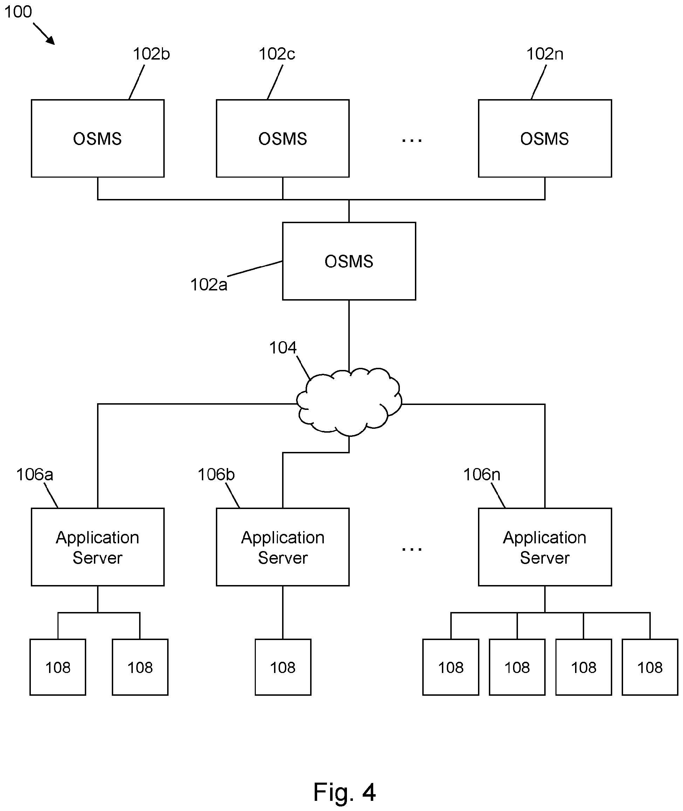

Figure 4 shows an alternative system 200, where it shares features in common with the system 100 in Figure 1 like features are indicated by like reference numerals. The system 200 differs from system 100 in that there are a plurality of object state management servers 102a - 102n. The application servers 106a - 106n are configured to transmit object state data (either changes in or the values themselves) to a nexus OSMS 102a, which can then distribute the management of this object state data to one of the other OSMSs 102b - 102n. This allows the management of object state data to be further scaled as the complexity of the shared virtual environment is increased.

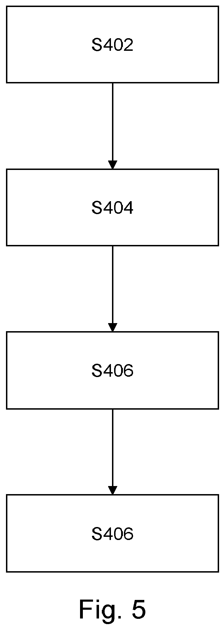

Figure 5 shows a flow chart of a method according to the present disclosure. In a first step, S402, a plurality of application servers as discussed previously each simulate one or more objects in a shared virtual environment and communicate to one or more client devices data relating to the one or more objects and the shared virtual environment. In a second step, S404, an object state management server as discussed previously stores and distributes object state data generated by and/or associated with the or each object simulated by the application servers, which is indicative of one or more states of each object. In a third step, S406, a given application server of the plurality of application servers transmits to an OSMS further object state data related to a given object over which the given application server has authority. The OSMS then distributes, in step S408, the further object state data to one or more other application servers which are also simulating the respective object.

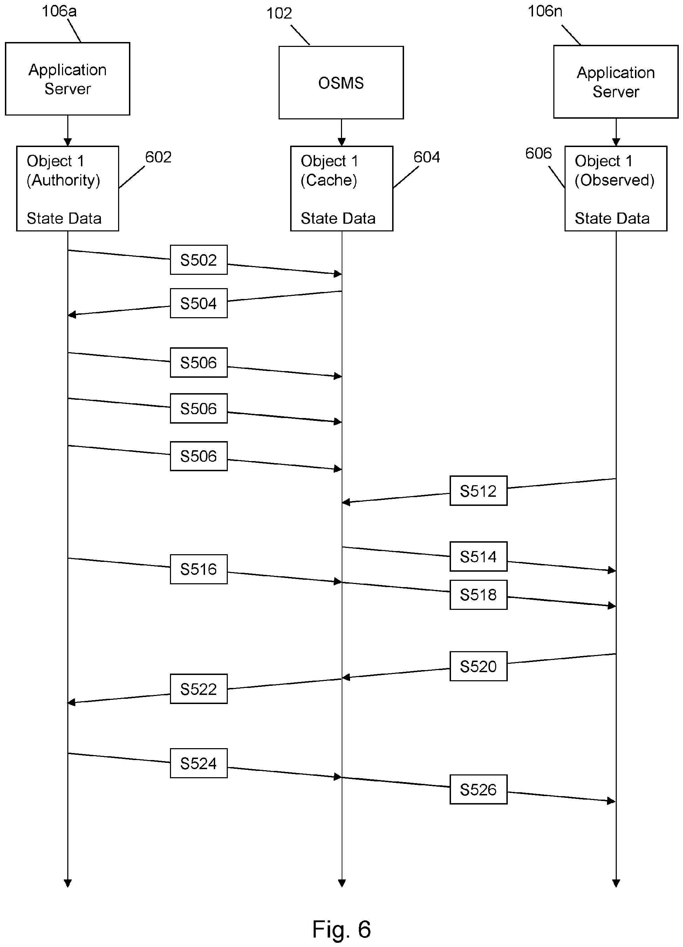

Figure 6 shows a swim lane diagram between copies of object state data (Object 1) simulated within the shared virtual environment. A first copy of the object state data, 602, is the version of the object state data which is authoritative. That is, it is the copy of the object state data stored on the application server 106a which has authority over it. A second copy of the object state data, 604, is a cached version of the object state data, stored in the OSMS 102 and utilised by another application server 106n. A third copy of the object state data 606, is an observed copy of the object state data, retrieved from the OSMS by another application server 106n, and utilised by that application server in its simulation.

In a first step S502, the application server 106a (i.e. the authoritative application server) creates a connection to the OSMS 102 and sends an initial value for the object 1 state. The OSMS the stores the object state data locally, and returns in step S504 a unique ID for that object state to the application server 106a. The application server 106a, at some later time, updates the value for the object 1 state and sends the difference between the acknowledged state stored in the OSMS 102 and the current state in step S506. This can happen a number of times, and so step S506 may be repeated as shown.

Another application server 106n, in step S512, connects to the OSMS and subscribes to object state data relating to object 1. The OSMS, in reply, sends the current state value for that object state to the application server 106n in step S514. In this example, the authoritative application server 106a then provides a further updated object state value in step S516 to the OSMS as a part of the ongoing simulation. As the OSMS updates its cached copy of the object state data, it will send out to all subscribes the difference between the acknowledged state and the current state in step S518.

At some other time, another application server 106n may send a message for object 1 to the OSMS in step S520. For example requesting that the object state data be updated to a given value. The OSMS will cache this request, and then forward it on to the authoritative application server 106a in step S522. The authoritative server 106a then processes the request, for example by updating the authoritative copy of the object state data 602 and then transmitting to the OSMS an acknowledgement that the request was processed in step S524 together with any response data. If the request is denied, the acknowledgement will be a plain acknowledgment packet. The OSMS will then send an acknowledgement of the processed request on to the requesting application server 106n in step S526 such that the other application server 106n thereby finalises its requested change to the object state data.

This mechanism, as set out in steps S520 - S526, allows an application server which is not authoritative over a given object to mitigate against latency by predicting the change in object state data. The simulation can continue on an assumption that the request will be allowed, and if a negative acknowledgement is sent the simulation can be updated based on the difference between the predicted object state value and the actual object state value.

The process as a whole also improves resilience and robustness. If the authoritative application server crashes or the object state data is otherwise lost, the cached version of the object state data stored in OSMS 102 can be utilised in recovery by the authoritative application server. Similarly, if the OSMS crashes or otherwise losses the object state data it has cached, it can retrieve the object state data from the authoritative application server.

Whilst the above is discussed with reference to application servers, as has been mentioned previously, the system may be a peer-to-peer system and so the application servers may be referred to as a clients.

The term 'connected' as used herein encompasses both direct and indirect communication pathways between two or more elements. A communications pathway may be provided through a physical entity such as a wired connection or may be provided through a non-physical communication system such as a network.

The systems and methods of the above embodiments may be implemented in a computer system (in particular in computer hardware or in computer software) in addition to the structural components and user interactions described.

The term 'computer system' includes the hardware, software and data storage devices for embodying a system or carrying out a method according to the above described embodiments. For example, a computer system may comprise a central processing unit (CPU), input means, output means and data storage. The computer system may have a monitor to provide a visual output display. The data storage may comprise RAM, disk drives or other computer readable media. The computer system may include a plurality of computing devices connected by a network and able to communicate with each other over that network.

The methods of the above embodiments may be provided as computer programs or as computer program products or computer readable media carrying a computer program which is arranged, when run on a computer, to perform the method(s) described above.

The term 'computer readable media' includes, without limitation, any non-transitory medium or media which can be read and accessed directly by a computer or computer system. The media can include, but are not limited to, magnetic storage media such as floppy discs, hard disc storage media and magnetic tape; optical storage media such as optical discs or CD-ROMs; electrical storage media such as memory, including RAM, ROM and flash memory; and hybrids and combinations of the above such as magnetic/optical storage media.

While the disclosure has been described in conjunction with the exemplary embodiments described above, many equivalent modifications and variations will be apparent to those skilled in the art when given this disclosure. Accordingly, the exemplary embodiments of the disclosure set forth above are considered to be illustrative and not limiting. Various changes to the described embodiments may be made without departing from the spirit and scope of the disclosure.

In particular, although the methods of the above embodiments have been described as being implemented on the systems of the embodiments described, the methods and systems of the present disclosure need not be implemented in conjunction with each other, but can be implemented on alternative systems or using alternative methods respectively.

The features disclosed in the description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

### List of Features

- 100: System
- 102: Object state management server
- 104: Network
- 106: Application server
- 108: Client
- 202, 302: Processing unit
- 204, 304: Network adaptor
- 206, 306: Storage
- 602: Authoritative object state data copy
- 604: Cached object state data copy
- 606: Observed object state data copy

## Claims

1. A system, comprising:
a plurality of application servers, each configured to simulate one or more objects in a shared virtual environment, and to communicate with one or more client devices so as to exchange data related to the one or more objects and the shared virtual environment;
wherein each object generates and/or has associated with it, object state data indicative of one or more states of each object;
the system further comprising an object state management server, configured to store and distribute object state data of the one or more objects simulated in the shared virtual environment;
wherein the object state management server is connected via a network to the plurality of application servers, and is configured to:
receive further object state data related to a given object from a respective application server of the plurality of application servers, and
to distribute said further object state data to at least one other application server of the plurality of application servers.

2. The system of claim 1, wherein the object state management server is configured to ascertain an owner of the one or more objects simulated by a given application server, and to update object state data associated with the object only if the updated state data or request for update is received from the owner of the object.

3. The system of claim 1 or claim 2, wherein the system comprises a plurality of object state management servers, and wherein a given object state management server is configured to migrate all object state data stored on that object state management server to another object state management server during a hand-over process.

4. The system of any preceding claims, wherein the system comprises a plurality of object state management servers, one of which is a nexus object state management server, and the plurality of application servers are configured to transmit all object state data requests to the nexus object state management server, and the nexus object state management server is configured to forward on object state data requests to a respective object state management server.

5. The system of any preceding claim, wherein the object state management server is configured to distribute changes in object state data to one or more of the application servers.

6. The system of any preceding claim, wherein the object state management server is configured to receive a request from an application server of the plurality of application servers and/or another object state management server for all state data generated by or associated with one or more objects, and to transmit to the requesting application server and/or requesting object state management server said data.

7. The system of any preceding claim, wherein the object state management server is configured to receive a subscription request for an object from an application server of the plurality of application servers, and to transmit any changes to the state data for said object to the subscribing application server.

8. The system of any preceding claim, wherein the application servers are client devices, configured to communicate with one or more other client devices, each client device providing a user with access to the shared virtual environment.

9. The system of any preceding claim, wherein the object state management server is configured, when it receives a request to update state data associated with an object from an application server of the plurality of application servers which is not the owner of the object, to forward the request to update the object state data to another application server of the plurality of application servers which is the owner of the object.

10. A computer-implemented method of managing object state data, the method being performed on a system comprising:
a plurality of application servers; and
an object state management server;
the method comprising:
simulating, by each of the application servers, one or more objects in a shared virtual environment, and communicating to one or more client devices data relating to the one or more objects and the shared virtual environment;
storing and distributing, by the object state management server, object state data generated by and/or associated with the or each object, which is indicative of one or more states of each object;
transmitting, by a respective application server of the plurality of application servers to the object state management server over a network, further object state data related to a given object;
and
distributing, by the object state management server, the further object state data to at least one other application server of the plurality of application servers over the network.

11. A non-transitory computer-readable storage medium, containing machine executable instructions which, when executed on a processor, cause the processor to perform the method of claim 10.

12. An object state management server, comprising:
a communications module, configured to connect to a plurality of application servers over a network, each application server being configured to simulate one or more objects in a shared virtual environment, and to receive therefrom object state data indicative of one or more states of each object;
an object state data store, configured to store the received object state data; and
an object state data distributor;
wherein the communications module is further configured to receive further object state data related to a given object from a respective application server of the plurality of application servers; and
the object state data distributor is configured to distribute, via the communications module, said further object state data to at least one other application server of the plurality of application servers.

13. An application server, comprising:
a processor configured to simulate one or more objects in a shared virtual environment, and to communicate with one or more client devices so as to exchange data related to the one or more objects and the shared virtual environment; and
a communications module, configured to:
communicate with one or more other application servers over a network, each simulating respective objects in the same shared virtual environment;
transmit over the network, to an object state management server, object state data related to a given object in the shared virtual environment; and
receive over the network, from the object state management server, object state data related to another object in the shared virtual environment.
